# EUROPÄISCHE PATENTSCHRIFT

(11) **EP 0 732 045 B1**
(45) Veröffentlichungstag und Bekanntmachung des Hinweises auf die Patenterteilung: **26.05.1999**
(21) Anmeldenummer: 96101457.8
(22) Anmeldetag: 02.02.1996
(51) Int. Cl.: A01D 41/12, A01B 69/00

(54) **Reflex-Ortungsvorrichtung**
Reflex-orientation device
Dispositif de reflex-orientation

(30) Priorität: 13.03.1995 DE 19508942
(43) Veröffentlichungstag der Anmeldung: 18.09.1996
(73) Patentinhaber: CLAAS KGaA, 33428 Harsewinkel (DE)
(72) Erfinder: Huster, Jochen, D-33428 Harsewinkel (DE); Diekhans, Norbert, Dr., D-33335 Gütersloh (DE); Homburg, Helmut, D-33428 Harsewinkel (DE)

(56) Entgegenhaltungen:
- EP-A- 0 375 301
- DE-A- 2 109 744
- DE-A- 2 455 836
- FR-A- 2 152 913
- FR-A- 2 184 856
- US-A- 4 077 488
- TRANSACTIONS OF THE ASAE, Bd. 19, Nr. 4, 7.August 1976, Seiten 639-642, XP002005535 KIRK: "SWATHER EDGE GUIDE STEERING CONTROL SYSTEM"

## Beschreibung

Die Erfindung betrifft eine Reflex-Ortungsvorrichtung an einer Landmaschine oder dergleichen, insbesondere eine Erntegutkanten-Ortungsvorrichtung, deren Ortungssignale einer Regelvorrichtung zugeführt sind, die mindestens ein Lenkhydraulikstellsignal an eine elektrisch gesteuerte Lenkhydraulik von lenkbaren Rädern der Landmaschine derart abgibt, daß eine jeweilige Ortungssignalabweichung von einem vorgegebenen Ortungskriterium, insbes. ein vorgegebener Seitenabstand einer Erntegutkante zu einer seitlichen Mähwerkkante, minimiert wird, wobei Sender und Empfänger der Ortungsvorrichtung mit ihrem Ortungsstrahlenbereich so ausgerichtet an der Landmaschine angeordnet sind, daß dieser leicht zum Boden geneigt ist und das Getreidefeld erfaßt.

Eine derartige Vorrichtung ist aus der DE-C-24 55 836 bekannt, die einen Sender und einen Empfänger aufweist, die vom Mähwerk nach vorn leicht zum Boden geneigt und in einem spitzen Winkel seitlich auf das stehende Getreide gerichtet sind, und deren Empfängersignalamplitude im Vergleich zu einem vorgegebenen Sollwert für eine Lenkungsregelung ausgewertet wird. Zur Verringerung von Störeinflüssen wurden schmalbandige Lichtstrahler, Polarisatoren und Modulatoren oder kurzwellige stark gebündelte elektromagnetische Wellen und eine periodische horizontale Schwenkung des Strahlers sowie entsprechende Signalauswertemittel genutzt. Durch die seitliche Abtastung der Getreidefront bestand der Nachteil, daß schwankende Eigenschaften, insbesondere eine wechselnde Dichte des stehenden Getreides oder liegendes Getreide, die Lenkung stark beeinflussen und das Fahrzeug dadurch in einen schwachen oder liegenden Bestand hineingelenkt wurde.

Weiterhin ist eine Ortungsvorrichtung aus der DE-A-21 09 744 bekannt. Diese besteht aus einem Strahler, der nahe den Messern am Mähwerk und nahe der Erntegutkante im Getreidefeld angeordnet ist, mit beidseitig dazu angeordneten Photozellen, deren Sensorsignale zugehörige Steuerrelais betätigen, deren inverswirkenden Steuerkontakte auf die rechts- bzw. linkssteuernden Lenkhydraulikventile der Hinterräder der Erntemaschine arbeiten. Diese Vorrichtung hat den Nachteil, daß die Dichte des Erntegutes in die Regelgenauigkeit unmittelbar eingeht, indem dichteabhängig ein scheinbarer Seitenversatz des Mähwerkes zur Erntegutkante signalisiert wird. Außerdem wird eine Abweichung der Fahrtrichtung vom Erntegutkantenverlauf nicht erkannt, was das Regelverhalten träge gestaltet.

Es ist Aufgabe der Erfindung, eine Ortungsvorrichtung zu offenbaren, die eine weitgehend von der Getreidedichte unabhängige Erfassung der Erntegutkante erbringt und eine genauere Lenkungsregelung ermöglicht.

Die Lösung besteht darin, daß die Ortungsvorrichtung oberhalb des Getreides beabstandet dazu angeordnet ist und der Ortungsstrahlenbereich etwa senkrecht zum Mähwerk ausgerichtet ist und, wenn die Getreidekanten-Seitelage korrekt ist, vor dem Mähwerk mit einem Teilstrahlenbereich schräg von oben das stehende Getreide des Getreidefeldes und mit dem übrigen Teilstrahlenbereich das Stoppelfeld erfaßt.

Es hat sich für einen Mähdrescher als günstig erwiesen, entweder zwei Teilortungsvorrichtungen so anzuordnen, daß eine das Stoppelfeld und eine zweite das Getreidefeld erfaßt oder daß von Teilbereichen eines Ortungsstrahles jeweils beidseitig der Getreidekante das Getreide und die Stoppeln erfaßt werden. Es lassen sich auf erstere Weise sowohl scharf gebündelte optische Sensorsignale, insbesondere Laserstrahlreflexe, als auch auf die zweite Weise akustische Echosignale oder Mikrowellenreflexe auswerten.

Die Ortungsvorrichtung, welche die Getreidekante beidseitig abtastet, ist vorteilhaft so eingerichtet, daß sie einen Bereich erfaßt, der mehrere Meter vor dem Schneidwerk der Erntemaschine liegt, da diese andererseits an ihren rückwärtsgelegenen Rädern gelenkt wird und deshalb eine Abweichung vom vorgesehenen Fahrweg nur nach einem größeren zurückgelegten Fahrweg ausgeglichen werden kann.

Bei dieser Anordnung hat es sich als günstig erwiesen, das Ist-Signal des Radstellwinkels als weitere Eingangsgröße in die Regelvorrichtung einzuführen, so daß praktisch vorausschauend aus diesem Signal der spätere Weg der Erntemaschine berücksichtigt wird. Hierzu hat es sich als vorteilhaft erwiesen, ein zweidimensionales Kennlinienfeld zu erstellen, dessen Eingangsgrößen in digitalisierter Form das normierte Ortungssignal und das Radstellwinkelsignal sind und dessen Inhalte jeweils eine dazu passende Lenksteuergröße bilden. Dieses Kennlinienfeld kann ferner nach und nach in seinen Eintragungen für eine optimale Lenkung optimiert werden und leicht besonderen Verhältnissen angepaßt werden.

Es hat sich gezeigt, daß bei herkömmlichen Mähdreschern etwa 60% der Aufmerksamkeit des Fahrers für das Lenken der Maschine beansprucht wurde. Die Lenktätigkeit ist deshalb besonders anstrengend, da das Lenken mit den Hinterrändern eine relativ lange Vorhaltezeit benötigt, bis eine seitliche Lageänderung des Mähdreschers zur Getreidekante auftritt, und danach muß durch ein entsprechendes Gegensteuern wieder die Geradeausfahrt herbeiführt werden. Das automatische Lenken ermöglicht bei praktisch völliger diesbezüglicher Entlastung des Fahrers im allgemeinen ein schnelleres Fahren und eine annähernd vollständige Auslastung der Schneidwerksbreite bis auf einen Sicherheitsrestabstand von 10 bis 20 cm.

Die Teilortungsvorrichtungen sind bevorzugt Laserentfernungsmesser; es lassen sich jedoch auch Ultraschallsender-Empfängeranordnungen verwenden.

Der Ortungssensor, der Bereiche beidseits der Getreidekante erfaßt, weist jeweils Fokussierungsmittel auf, die einen Raumwinkel erfassen, der eine Halbwertsbreite von 8° und eine 90% Erfassungsweite von 16° hat. Es hat sich vorteilhaft erwiesen, die Teilortungssensoren an der seitlichen Kante des Schneidwerks in etwa 1 m bis 1,5 m Höhe über dem Boden oder 200 mm - 400 mm über den Ähren anzuordnen. Der Raumwinkel ergibt im Auftreffgebiet einen erfaßten Bereich von etwa 1 m Durchmesser.

Es sind zwei verschiedene Ausführung der Reflex-Ortungsvorrichtungen beschrieben, von denen die eine mit einem Ultraschall- oder Mikrowellenfächer arbeitet, der ein Teilecho von den beschallten Ähren und ein späteres Teilecho, das vom Stoppelfeld reflektiert wird, erzeugt. Diese beiden Echokomponenten werden abhängig von ihrem Eintreffen den beiden georteten Bereichen zugeordnet und zeitlich getrennt erfaßt. Die relative Größe der beiden Bereiche zueinander oder das Echosignal von den Ähren werden relativ zu oder in Bezug auf einen Vergleichswert als Steuerkriterium genutzt. Dieser Vergleichswert wird zweckmäßig ebenso wie die Zeitgrenzen für die Signalauswertung in der Regelvorrichtung oder in einem Zentralprozessor gespeichert vorgehalten, so daß sie je nach Fruchtart und Getreidehöhe vorgewählt werden können.

Vorzugsweise wird jeweils das Signal in dem ersten bzw. zweiten Zeitbereich integriert, so daß die Schwankungen, die von den Unregelmäßigkeiten der Oberflächen herrühren, im wesentlichen aus dem Signal beseitigt werden. Es ist zweckmäßig, dem Ortungsstrahl eine Halbwertsbreite von 5° bis 10° zu geben, damit eine gute Regelqualität erreicht wird. Etwa auftretende seitliche Nebenkeulen des Ortungsstrahles und der Empfängeremfindlichkeitsverteilung haben keine wesentliche Auswirkung, da die Mitte des Ortungsstrahles praktisch über der Erntegutkante liegt und in etwa mit dieser fluchtet, wenn eine korrekte Ausrichtung des Mähwerkes zum Getreidebestand erreicht ist.

Es hat sich als vorteilhaft erwiesen, wenn die Ortungsvorrichtung etwa 100 mm bis 500 mm, vorzugsweise 200 mm bis 400 mm, über den Ähren angeordnet ist und ihr Neigungswinkel gegen die Horizontale 5° bis 45°, vorzugsweise 15° bis 25°, beträgt. Die Haltevorrichtung ist deshalb so ausgebildet, daß eine Einstellung der Ortungvorrichtung in der Höhe und/oder im Neigungswinkel passend zu dem jeweiligen Getreide vorgenommen werden kann. Auch kann eine motorische Einstellung der Höhe und/oder der Neigung vorgesehen werden. Es hat sich als vorteilhaft erwiesen, wenn die Neigiungseinstellung und/oder die Höheneistellung jeweils beim Eintritt in eine bestimmte Erntegutart und normalaurichtung des Mähwerkes zur Erntegutkante, so geregelt vorgenommen werden, daß das erste, frühe Echosignal und das zweite, späte Ortungssignal jeweils zu vorbestimmten Zeiten nach der Ortungsimpulsaussendung auftreten.

Bei einer weiteren Ausführung werden zwei relativ scharf gebündeten Teilortungsstrahlen, inbes. Laserstrahlen um einige Grad divergierend, im spitzen Winkel zur Horizontalen geneigt, einerseits auf das Stoppelfeld und anderseits auf das Getreidefeld gerichtet. Auch hierbei treten Echos (Reflexionen) zu unterschiedlichen Zeiten nach der Aussendung eines Laserimpulses auf. Liegen die Reflexionen sehr früh und dicht beieinander, so ist eine Lenkkorrektur notwendig, die den einen Strahl aus dem Getreidefeld herausbringt, und sind beide Echos spätliegend, so ist eine Lenkkorrektur notwendig, so daß der eine Strahl wieder auf das Getreidefeld fällt. Hierdurch ist also eine Zweipunktregelung gegeben. Um eine gute Regelqualität zu erreichen, empfiehlt es sich, die beiden Strahlen um ca. 3° divergieren zu lassen und mindestens 15° gegen die Horizontale zu neigen, so daß sie das Getreidefeld bzw. den Boden in 3 m bis 6 m bzw. in 6 m bis 12 m Entfernung tangieren.

Es hat sich vorteilhaft erwiesen, die beiden Strahlen in der Vertikalen leicht gegeneinander geneigt auszusenden, wodurch die beiden Echos zeitlich einen geringen Abstand bekommen, wenn sie beide vom Boden oder beide vom Getreidefeld reflektiert werden. Auf diese Weise läßt sich auch erkennen, ob beide Strahlen ihr Ziel erreicht haben oder etwa in der Haspel, also vor dem interessierenden Wirkbereich reflektiert worden sind. Die vertikale Divergenz der Strahlen liegt zweckkmäßig zwischen 1° und 5°.

In dieser Ausführung sind beide Teilortungsvorrichtungen gegeneinander vertikal verfahrbar oder verschwenkbar angeordnet. Es muß also nur eine der Teivorrichtungen Verstellbar sein. Die Normaleinstellung ist zweckmäßig dabei so gewählt und zweckmäßig automatisch zu Beginn der Arbeit auf einem Feld so eingeregelt, daß jeweils beide Echosignale gleichzeitig zu einer vorgegebenen mittleren Echozeit auftreten, wenn die korrekte Ausrichtung des Mähwerkes vorliegt. Bei einem Abweichen der Mähwerksrichtung oder einem Seitenversatz des Mähwerkes von der Normallage tritt dann eines der Echosignale zu spät oder zu früh auf, was im Betrieb zur Lenkkorrektur genutzt wird.

In einer anderen Ausführung wird statt der beiden Laserteilstrahlen mit festen, horizontal divergierenden Einstellungen ein Laserstrahl fächerartig pendelnd, also ein sogenannter Scanner, benutzt. Die jeweilige horizontale Winkellage des Ortungsstrahles wird laufend der Regelvorrichtung signalisiert, und derjenige Winkelwert, bei dem der Durchgang des Ortungsstrahles durch die Erntegutkante anhand der Auswertung der Signale erkannt wird, wird in Bezug auf den Mittellagenwinkelwert und den gesamten Scannerwinkelwert als das genormte Ortungssignal bei der Regelung verwandt.

Anhand der Figuren 1 bis 7 sind vorteilhafte Ausgestaltungen dargestellt.
- Fig. 1: zeigt ein Übersichtsbild eines Mähdreschers mit einer Lenkregelvorrichtung;
- Fig. 2: zeigt einen Getreidekantenabtaster mit zwei Ortungsstrahlen im Normalbetrieb;
- Fig. 2a: zeigt die Reflexsignale zu Fig. 2;
- Fig. 2b: zeigt eine Seitenansicht zu Fig. 2;
- Fig. 3: zeigt den Getreidekantenabtaster bei Auslenkung in das Stoppelfeld;
- Fig. 3a: zeigt die Echosignale zu Fig. 3;
- Fig. 4: zeigt den Getreideabtaster mit beiden Ortungsstrahlen im Getreidefeld;
- Fig. 4a: zeigt die Echosignale zu Fig. 4;
- Fig. 5: zeigt eine Seitenansicht auf eine zweite Ausführung der Ortungsvorrichtung mit einer Schall- oder Mikrowellenkeule;
- Fig. 5a: zeigt eine Aufsicht zu Fig. 5;
- Fig. 5b: zeigt die Echosignale bei korrekter Ausrichtung des Ortungsstrahles;
- Fig. 6: zeigt die Echosignale bei ins Stoppelfeld gerichtetem Ortungsstrahl;
- Fig. 7: zeigt die Echosignale bei in das Getreidefeld gerichtetem Ortungsstrahl.

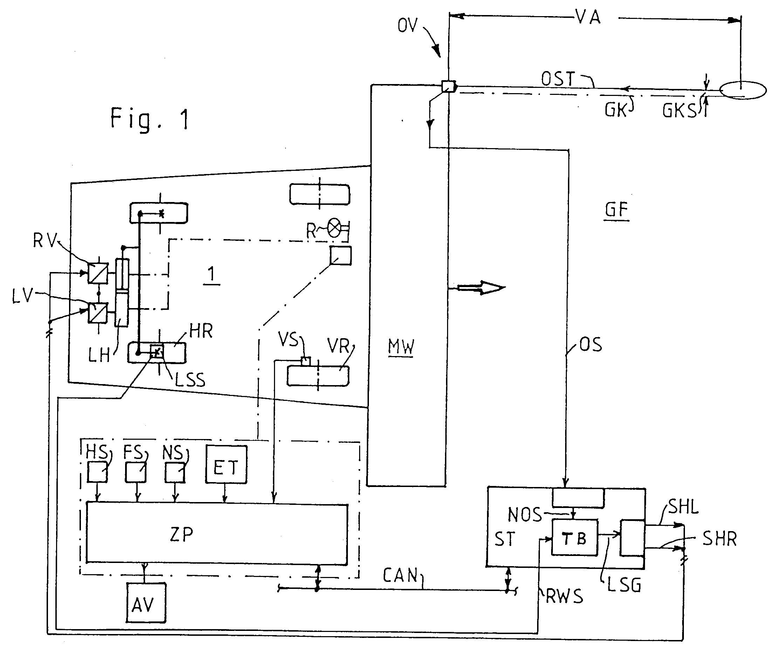

Figur 1 zeigt einen Mähdrescher (1) mit einem Mähwerk (MW), welcher an einer Getreidekante (GK) eines Getreidefeldes (GF) unter Einhaltung einer möglichst geringen Abweichung von einer vorgegebenen Getreidekantenseitenlage (GKS) automatisch geregelt entlangfahren soll. Etwa 1 m bis 1,5 m oberhalb des Mähwerkes (MW) ist eine Ortungsvorrichtung (OV) angeordnet, deren Ortungsstrahlenbereich (OST) auf das Stoppelfeld und teils auf das Getreidefeld (GF), also beiderseits zur Getreidekante (GK) orientiert sind, und deren Ortungssignale (OS1) einer Regelvorrichtung (ST) zugeführt sind. Diese Ortungssignale werden zweckmäßig digitalisiert und in ein genormtes Ortungssignal (NOS) umgesetzt.

Im vorgegebenen Beispiel ist die Regelvorrichtung (ST) über einen genormten Datenbus (CAN) mit einem Zentralprozessor (ZP) verbunden, über den auch die übrigen Steuerprozesse des Mähdreschers überwacht werden. Hierzu sind an dem Zentralprozessor (ZP) eine Eingabetastatur (ET) und eine Ausgabevorrichtung (AV) vorgesehen. Weiterhin nimmt der Zentralprozessor (ZP) von den Vorderrändern (VR) ein Geschwindigkeitssignal (VS) auf. Von der Regelvorrichtung (ST) wird die Lenkhydraulik (LH) mittels eines Linkssteuerventiles (LV) und eines Rechtssteuerventils (RV) angesteuert, deren hydraulischen Ausgänge die vorhandene Lenkhydraulik (LH) beaufschlagen, die den Einschlag der Hinterrädern (HR) bewirkt. An der Lenkvorrichtung wird ein Radstellwinkelsignal (RWS) abgenommen und der Regelvorrichtung (ST) zugeführt. Die Lenkstellventile (LV, RV) sind federbelastet selbstsicher ausgeführt, so daß sie bei Stromausfall geschlossen sind. In diesem Zustand wird die Lenkung unmittelbar über die bekannte hydraulische Steuerung vom Lenkrad (R) aus vorgenommen. In der Bedienerkabine sind außerdem ein Handschalter (HS), ein Fußschalter (FS) und ein Sicherheitsschalter (NS) angeordnet, deren Signale der Lenkstellventilanordnung aus Sicherheitsgründen zugeführt sind und der Regelvorrichtung (ST) zu deren Aktivierung bei Vollständigkeit dieser Signale zugänglich gemacht sind.

Es läßt sich erkennen, daß der Vorausabstand (VA) mit dem der Ortungstrahlenbereich (OST) die Getreidekante (GK) abtastet, in etwa dem Abstand der Vorderräder (VR) von den Hinterrädern (HR) entspricht. Auf diese Weise ergibt eine Winkelabweichung der Mähdrescherachse zur Getreidekante, die sich in dem Ortungssignal als Teilkomponente darstellt, ein Äquivalent zu dem Radstellwinkelsignal. Diese jeweilige Winkelkomponente des Ortungssignalbereichs überlagert jeweils die Komponente der Seitenabweichung der Richtungsachse des Mähdreschers von dem vorgegebenen Sollweg, d.h. die Komponente, die die Getreidekanten seitenlage (GKS) jeweils erbringt.

Die Ortungsvorrichtung (OV) speist ihr normiertes Ortungssignal (NOS) analog oder vorzugsweise bereits digitalisiert erzeugt in die Regelvorrichtung (ST) ein. Die anderen Sensoren welche die übrigen Eingangsgrößen erzeugen, liegen im allgemeinen in dem Mähdrescher verteilt und geben ihre Signale, ggf. über zugehörige Digitalisierer und Rechner, ebenfalls an die Regelvorrichtung weiter. Selbstverständlich können auch deren Normierer jeweils zugehörig unmittelbar dort an den Sensoren installiert sein.

An den gelenkten Hinterrädern (HR) befindet sich ein Lenkradstellungssensor (LSS), dessen Radwinkelsignal (RWS) in geeigneter Weise als Eingangssignal benutzt wird.

Hierbei hat sich als günstig erwiesen, das normierte Ortungssignal (NOS) und das Radstellwinkelsignal (RWS) einer zweidimensionalen Tabelle (TB) adressierend zuzuführen, die ein zweidimensionales Kennwertefeld enthält, welches geeignete Lenkstellgrößen (LSG) enthält. Diese Lenkstellgröße (LSG) wird jeweils in ein linkes bzw. rechtes Hydraulikstellsignal (SHL, SHR) umgesetzt und dem Links- bzw. Rechtssteuerventil (LV, RV) zugeführt.

Der Aufbau der Regelvorrichtung mittels eines digitalen Rechners ermöglicht die völlige Integration des Lenksystems in die übrige digitale Steuerung des Mähdreschers. Durch einfache Parametrisierung und durch eine Bedienung von der zentralen Bedienungskonsole der Erntemaschine werden die Parameter dem Prozessor vorgegeben; die Regelvorrichtung selbst ist in ihrer Grundstruktur völlig neutral. Auch die unterschiedlichsten Ortungssysteme lassen sich durch einfache Parametrisierung und Normierung der Signale anschließen, und es ist keine spezielle hardwaremäßige Auslegung der Regelvorrichtung hierfür erforderlich.

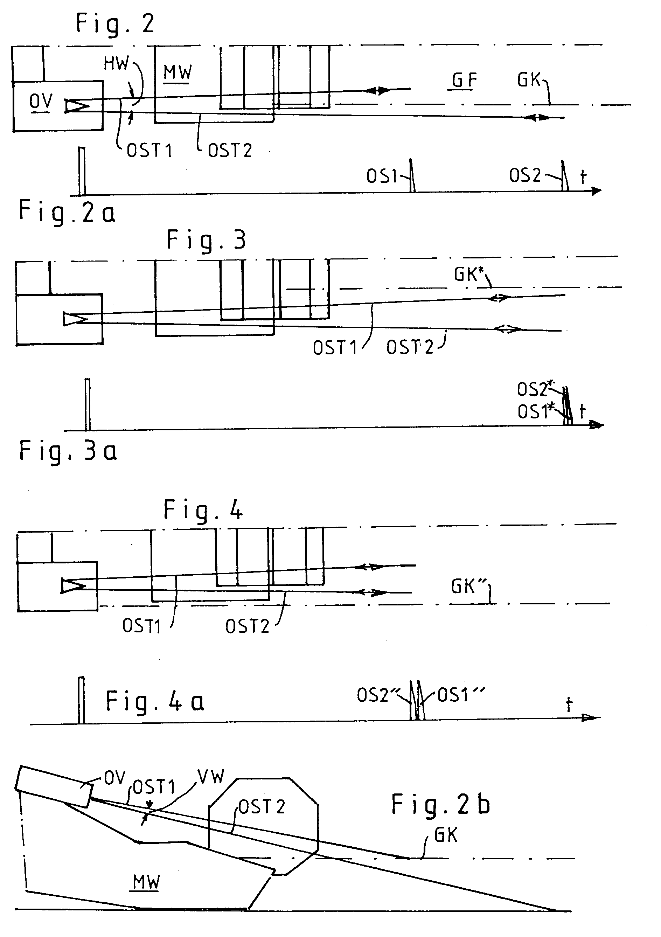

Figur 2 zeigt eine Aufsicht auf eine Ortungsvorrichtung (OV) mit zwei um einen Winkel (HW) von etwa 5° divergierenden Ortungsstrahlen (OST1, OST2), welche über das Mähwerk (MW) hinweg einerseits in das Getreidefeld (GF) und andererseits neben die Erntegutkante (GK) auf das Stoppelfeld fallen. Demgemäß ergibt sich jeweils ein zeitliches Echosignal (OS1, OS2), wie Fig. 2 zeigt, zu einem frühen Zeitpunkt und zu einem späten Zeitpunkt. Diese beiden Ortungssignale (OS1, OS2) werden durch eine Zeitfilterung getrennt und zeigen bei ihrem Vorhandensein das eine korrekte Ausrichtung des Mähwerkes (MW) zur Getreidekante (GK) in vorgegebenen Grenzen vorliegt.

Fig. 3 zeigt eine Verlagerung der Getreidekante (GK*) von der Mähwerkkante weg. Demgemäß treffen die beiden Strahlen (OST1, OST2) auf das Stoppelfeld auf und es entstehen zeitlich späte Ortungssignale (OS1*, OS2*) wie die Figur 3 zeigt. Aus der Seitenansicht Figur 2b ist zu erkennen, daß die Ortungsstrahlen (OST1, OST2) um einen Vertikalwinkel (VW) versetzt aus der Ortungsvorrichtung (OV) ausgesendet werden, wodurch die Ortungssignale (OS1*, OS2*) zwar zeitlich spät aber gegeneinander leicht versetzt auftreten.

Figur 4 zeigt einen weiteren Fall, in der die Getreidekante (GK2'') gegenüber der Solllage versetzt ist, so daß die beiden Ortungsstrahlen (OST1, OST2) in das Getreidefeld fallen. Dadurch und wegen des Vertikalversatzes (VW) der Strahlen entstehen zu einem frühen Zeitpunkt zwei leicht gegeneinader versetzte Echosignale (OS1'', OS2'') wie Figur 4a zeigt.

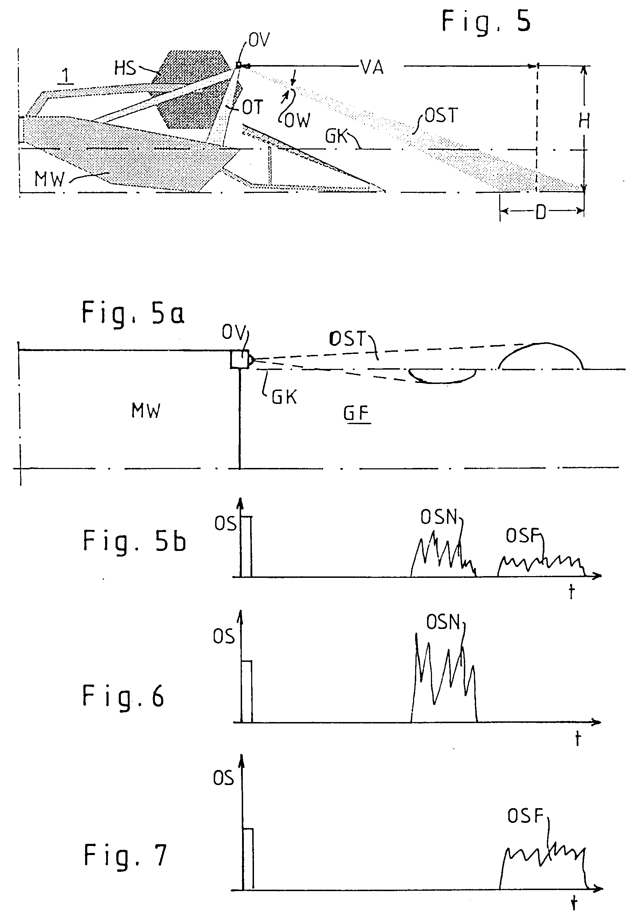

Figur 5 zeigt in einer zweiten Ausführung eine Seitenansicht des Mähwerkes (MW) des Mähdreschers (1) im Bereich der Getreidekante (GK) und des Ortungsstrahlbereiches (OST). Die zugehörige Ortungsvorrichtung (OV) ist auf einem Träger (OT) in eine Höhe (H) von etwa 1 m - 1,5 m über dem Boden im vorderen Bereich des Mähwerkes (MW) angeordnet. Die günstigste Höhe ist 200 mm - 400 mm über den Ähren. Der Ortungsstrahlbereich (OST) ist 15° - 25° gegen die Horizontale geneigt teils auf den Boden und teils auf die Getreidekante (GK) gerichtet, so daß er um einen Vorausabstand (VA) von 4 bis 6 m den Boden erfaßt. Der Raumwinkel (OW) des Ortungsstrahlbereichs, der erfaßt wird, beträgt etwa 8° für 50% des Signalanteils und etwa 16° für 90% des Signalanteils. Der am Boden erfaßte Bereich hat einen Durchmesser (D) von ca. 2 m.

Figur 5a läßt in der Aufsicht erkennen, daß die Strahlenkeule oder der Strahlenfächer bei korrekter Lage des Mähwerkes zur Getreidekante in einem Nahbereich zum Mähwerk auf das Getreide trifft und im Fernbereich zum anderen Teil auf das Stoppelfeld. Demgemäß ergeben sich zwei Echosignale (OSN, OSF) etwa gleicher, mittlerer Amlitude im zeitlich nahen und zeitlich entfernteren Bereich, wie Figur 5 zeigt.

Die Figuren 6 und 7 zeigen jeweils die Echosignale (OSN*, OSF*) bei den beiden verschiedenen von der Normalstellung abweichenden Lagen des Mähwerkes, die eine etwa doppelte Amplitude haben und allein, entweder zeitlich früh oder zeitlich spät, auf. Das Echo an dem Getreide ist u.U. stark strukturiert, wenn die Halme unterschiedliche Höhe aufweisen oder geknickt sind. Es empfiehlt sich deshalb, jeweils das frühe und das späte Echosignal zeitlich zu integrieren und so quasi den Flächeninhalt des Signales zur Auswertung zu bringen. Die Signale werden entweder zueiander ins Verhältnis gesetzt und der Quotient mit einem Vergleichswert, der i.a. Eins ist, verglichen, und das Ergebnis wird so normiert zur Regelung genutzt.

Es läßt sich auch allein eines der Echosignale (OSN, OSF), das frühe oder das späte, durch einen Vergleich mit einem vorgegebenen Wert, der etwa der Hälfte des vollen Wertes entspricht, der bei voll in den Getreidebestand bzw. voll auf das Stoppelfeld gerichteten Ortungsstrahl (OST) entsteht, als Normortungssignal (NOS) nutzen. Bei korrekter Ausrichtung des Mähwerkes zum Bestand hat das genormte Ortungssignal (NOS) zum Beispiel den Wert Null.

## Patentansprüche

1. Reflex-Ortungsvorrichtung an einer Landmaschine (1) oder dergleichen, insbesondere eine Erntegutkanten-Ortungsvorrichtung, deren Ortungssignale (OS1, OS2; OS) einer Regelvorrichtung (ST) zugeführt sind, die mindestens ein Lenkhydraulikstellsignal (SHL, SHR) an eine elektrisch gesteuerte Lenkhydraulik (LH) von lenkbaren Rädern (HR) der Landmaschine (1) derart abgibt, daß eine jeweilige Ortungssignalabweichung von einem vorgegebenen Ortungskriterium, insbes. ein vorgegebener Seitenabstand (GKS) einer Erntegutkante (GK) zu einer seitlichen Mähwerkkante, minimiert wird, wobei Sender und Empfänger der Ortungsvorrichtung (OV; OV1, OV2) mit ihrem Ortungsstrahlenbereich (OST; OST1, OST2) so ausgerichtet an der Landmaschine (1) angeordnet sind, daß dieser leicht zum Boden geneigt ist und das Getreidefeld (GF) erfaßt, dadurch gekennzeichnet, daß die Ortungsvorrichtung (OV; OV1, OV2) oberhalb des Getreides beabstandet dazu angeordnet ist und der Ortungsstrahlenbereich (OST; OST1, OST2) etwa senkrecht zum Mähwerk (MW)ausgerichtet ist und, wenn die Getreidekanten-Seitelage (GKS) korrekt ist, vor dem Mähwerk (MW) mit einem Teilstrahlenbereich schräg von oben das stehende Getreide des Getreidefeldes (GF) und mit dem übrigen Teilstrahlenbereich das Stoppelfeld erfaßt.

2. Reflex-Ortungsvorrichtung nach Anspruch 1, dadurch gekennzeichnet, daß der Ortungsstrahlenbereich aus mindestens zwei enggebündelten Teilortungsstrahlen (OST1, OST2) besteht, die seitlich beabstandet oder divergierend so ausgerichtet sind, daß, wenn die Getreidekanten-Seitenlage korrekt ist, der erst Teilortungsstrahl (OST1) auf das Getreidefeld (GF) und der zweite Teilortungsstrahl (OST2) auf das Stoppelfeld gerichtet sind und die zeitliche Lage und der zeitliche Abstand der beiden zugehörigen Echo-Ortungssignale (OS1, OS2) derart ausgewertet werden, daß jeweils dann eine Lenkung ins Getreidefeld (GF) hinein erfolgt, wenn beide Echo-Ortungssignale (OS1*, OS2*) zeitlich zusammen oder nahe benachbart relativ spät auftreten, und jeweils dann eine Lenkung aus dem Getreidefeld (GF) hinaus erfolgt, wenn beide Echo-Ortungssignale (OS1'', OS2'') zeitlich zusammen oder nahe benachbart relativ früh auftreten, und eine Geradeauslenkung jeweils dann erfolgt, wenn ein relativ frühes und ein relativ spätes Echo-Ortungssignal (OS1, OS2) auftritt.

3. Reflex-Ortungsvorrichtung nach Anspruch 2, dadurch gekennzeichnet, daß die beiden Teilortungsstrahlen (OST1, OST2) gegen die Horizontale um einen Vertikalwinkel (VW) von 1° bis 5° unterschiedlich geneigt gerichtet sind und dann, wenn beide Echo-Ortungssignale (OS1*, OS2*; OS1'', OS2'') nicht getrennt auftreten, eine Störungsmeldung ausgegeben wird.

4. Reflex-Ortungsvorrichtung nach Anspruch 2, dadurch gekennzeichnet, daß die beiden Teiortungsstrahlen (OST1, OST2) in der Vertikalen gegeneinander so relativ geneigt und die Teilortungsvorrichtungen (OV1, OV2) in ihrer relativen Höhe, vorzugsweise durch eine Voreinstellungsregelung der relativen Höhe oder der relativen Neigung, so angeordnet sind, daß bei normal ausgerichtetem Mähwerk (MW) und bei normalem Getreidekanten-Seitenabstand (GKS) die beiden Ortungssignale (OS1, OS2) zu vorgegebenen Echozeiten, insbesondere zu einer gleichen vorgegeben Echozeit, auftreten und das Auftreten eines diebezüglich früheren bzw. späteren Ortungssignales im Erntebetrieb der Lenkungsregelung als das Regelkriterium zugefürt wird.

5. Reflex-Ortungsvorrichtung nach einem der Ansprüche 2 bis 4, dadurch gekennzeichnet, daß die Teilortungsstrahlen (OST1, OST2) um mindestens 15° nach unten geneigt verlaufen und in einem Abstand von 3 bis 6 m das Getreidefeld (GF) und von 6 bis 12 m das Stoppelfeld tangieren.

6. Reflex-Ortungvorrichtung nach einem der Ansprüche 2 bis 5, dadurch gekennzeichnet, daß die Teilortungsstrahlen (OST1, OST2) horizontal um ca. 3° divergieren.

7. Reflex-Ortungsvorrichtung nach einem der Ansprüche 2 bis 6, dadurch gekennzeichnet, daß die Teilortungsstrahlen (OST1, OST2) Laserstrahlen sind.

8. Reflex-Ortungsvorrichtung nach einem der Ansprüche 2 bis 7, dadurch gekennzeichnet, daß mehrere Teilortungsstrahlen (OST1, OST2) von einem Laserscanner periodisch ausgesendet und deren Reflexortungssignale empfangen und ausgewertet werden, wobei eine Scannerwinkellage jeweils der Steuervorrichtung als das Ortungssignal gemeldet wird und derjenige Scannerwinkellagenwert ermittelt wird und der Regelvorrichtung normiert zugeführt wird, bei dem die Reflex-Ortungssignale durch eine zeitliche Lageänderung einen Durchgang durch die Erntegut-kante (GK) anzeigen.

9. Reflex-Ortungvorrichtung nach Anspruch 1, dadurch gekennzeichnet, daß deren Sender und Empfänger Fokussierungsmittel aufweisen, so daß der Ortungsstrahlbereich (OST) einen Raumwinkel mit einer Halbwertbreite von 5° bis 10° erfaßt und bei korrekter Ausrichtung des Mähwerkes (MW) je ein hälftiger Ortungsstrahl-Teilbereich auf die relativ nahen Ähren des Getreidefeldes (GF) und der andere Ortungsstrahl-Teilbereich auf das entferntere Stoppelfeld fällt.

10. Reflex-Ortungvorrichtung nach Anspruch 9, dadurch gekennzeichnet, daß die Ortungsvorrichtung (OV), vorzugsweise einstellbar, 100 mm bis 500 mm, vorzugsweise 15° bis 25°, gegen die Horizontale geneigt etwa auf die Erntegutkante (GK) ausgerichtet ist.

11. Reflex-Ortungsvorrichtung nach einem der Ansprüche 9 oder 10, dadurch gekennzeichnet, daß der Ortungsstrahlenbereich (OST) die Landmaschine (1) um einen solchen Vorausabstand (VA) vorauseilend die Erntegutkante (GK) erfaßt, so daß die Ortungssignalabweichung von einem als Ortungskriterium vorgegebenen Vergleichswert teils einen Erntegutkanten-Seitenversatz (GKS) und teils einen jeweils bestehenden Fahrtrichtungswinkel zur Erntegutkante (GK) repräsentiert.

12. Reflex-Ortungsvorrichtung nach Anspruch 11, dadurch gekennzeichnet, daß der Vorausabstand (VA) etwa dem Abstand der lenkbaren Hinterräder (HR) von den Vorderrädern der Landmaschine (1) entspricht und von den Hinterrädern (HR) ein Radstellwinkelsignal (RWS) der Regelvorrichtung (ST) als weiteres IST-Signal zugeführt ist.

13. Reflex-Ortungsvorrichtung nach Anspruch 12, dadurch gekennzeichnet, daß ein normiertes Ortungssignal (NOS) und das Radstellwinkelsignal (RWS) digitalisiert jeweils adressierend einem zweidimensionalen Kenndatenfeld (TB) zugeführt sind, das jeweils so eine Lenksteuergröße (LSG) liefert, aus der jeweils das rechts- oder linkslenkende Lenkhydraulikstellsignal (SHL, SHR) gebildet wird.

14. Reflex-Ortungsvorrichtung nach einem der Ansprüche 9 bis 11, dadurch gekennzeichnet, daß nur der frühe Teil des Ortungssignales (OSF) erfaßt wird, der von dem Getreidefeld (GF) herrührt und integriert und/oder amplitudenmäßig ausgewertet und mit einem Vergleichswert jeweils verglichen wird, der einem halben Maximalwert entspricht, der bei voll in das Getreidefeld (GF) gerichtetem Ortungsstrahlenbereich (OST) auftritt, und jeweils die Abweichung von dem Vergleichswert als ein normiertes Ortungssignal (NOS) in der Regelvorrichtung (ST) weiter ausgewertet wird.

15. Reflex-Ortungsvorrichtung nach einem der Ansprüche 9 bis 11, dadurch gekennzeichnet, daß der frühe Teil des Ortungssignales (OSF) erfaßt wird, der von dem Getreidefeld (GF) herrührt, und getrennt davon der spätere Teil des Ortungssignales (OSN) erfaßt wird, der von dem Stoppelfeld herrührt und diese Signalanteile integriert werden und dann daraus ein Quotient gebildet wird, der bezüglich eines vorgegebene Vergleichswertes normiert wird und als ein normiertes Ortungssignal (NOS) in der Regelvorrichtung (ST) weiter ausgewertet wird.

16. Reflex-Ortungsvorrichtung nach einem der Ansprüche 14 oder 15, dadurch gekennzeichnet, daß die Vergleichswerte sowie die Zeitgrenzen der beiden Ortungssignalteile für verschiedenen Fruchtarten sowie Höhen- und Neigungseinstellung eingespeichert und auswählbar sind.

17. Reflex-Ortungsvorrichtung nach einem der Ansprüche 9 bis 16, dadurch gekennzeichnet, daß der Sender ein Ultraschallsender oder ein Mikrowellensender ist.

## Claims

1. A reflection locating apparatus on an agricultural machine (1) or the like, in particular a crop material edge locating apparatus, whose locating signals (OS1, OS2; OS) are fed to a regulating device (ST) which outputs at least one hydraulic steering control signal (SHL, SHR) to an electrically controlled hydraulic steering system (LH) of steerable wheels (HR) of the agricultural machine (1) in such a way that a respective locating signal deviation from a predetermined locating criterion, in particular a predetermined lateral spacing (GKS) of a crop material edge (GK) relative to a lateral cutter mechanism edge is minimised, wherein the transmitter and the receiver of the locating apparatus (OV; OV1, OV2) are arranged on the agricultural machine (2) with their locating beam region (OST; OST1, OST2) so oriented that it is slightly inclined relative to the ground and detects the corn field (GF), characterised in that the locating apparatus (OV; OV1, OV2) is arranged above the corn at a spacing relative thereto and the locating beam region (OST; OST1, OST2) is oriented substantially perpendicularly to the cutter mechanism (MW) and, if the corn edge lateral position (GKS) is correct, detects the standing corn of the corn field (GF) in front of the cutter mechanism (MW) with a partial beam region inclinedly from above and detects the stubble field with the remainder of the partial beam region.

2. A reflection locating apparatus according to claim 1 characterised in that the locating beam region comprises at least two tightly focussed partial locating beams (OST1, OST2) which are so oriented in laterally spaced or divergent relationship that, when the corn edge lateral position is correct, the first partial locating beam (OST1) is directed on to the corn field (GF) and the second partial locating beam (OST2) is directed on to the stubble field, and the position in respect of time and the spacing in respect of time of the two associated echo locating signals (OS1, OS2) are evaluated in such a way that steering into the corn field (GF) occurs in each case when both echo locating signals (OS1*, OS2*) occur in respect of time together or in closely adjacent relationship relatively late and steering out of the corn field (GF) occurs in each case when both echo locating signals (OS1'', OS2'') occur in respect of time together or in closely adjacent relationship relatively early, and straight-ahead steering occurs whenever a relatively early and a relatively late echo locating signal (OS1, OS2) occur.

3. A reflection locating apparatus according to claim 2 characterised in that the two partial locating beams (OST1, OST2) are directed at different inclinations relative to the horizontal through a vertical angle (VW) of from 1° to 5° and a fault message is produced when both echo locating signals (OS1*, OS2*; OS1'', OS2'') do not occur separately.

4. A reflection locating apparatus according to claim 2 characterised in that the two partial locating beams (OST1, OST2) are so inclined relative to each other in the vertical and the partial locating apparatuses (OV1, OV2) are so arranged in their relative height, preferably by virtue of pre-adjustment regulation of the relative height or the relative inclination, that with the normally oriented cutter mechanism (MW) and with a normal corn edge lateral spacing (GKS) the two locating signals (OS1, OS2) occur at predetermined echo times, in particular at an identical predetermined echo time, and the occurrence of a locating signal which is earlier or later respectively in that respect is fed in harvesting operation to the steering regulating system as the regulating criterion.

5. A reflection locating apparatus according to one of claims 2 to 4 characterised in that the partial locating beams (OST1, OST2) extend inclinedly downwardly through at least 15° and touch the corn field (GF) at a spacing of from 3 to 6 m and the stubble field at a spacing of from 6 to 12 m.

6. A reflection locating apparatus according to one of claims 2 to 5 characterised in that the partial locating beams (OST1, OST2) diverge horizontally by about 3°.

7. A reflection locating apparatus according to one of claims 2 to 6 characterised in that the partial locating beams (OST1, OST2) are laser beams.

8. A reflection locating apparatus according to one of claims 2 to 7 characterised in that a plurality of partial locating beams (OST1, OST2) are periodically emitted by a laser scanner and their reflection locating signals are received and evaluated, wherein a scanner angular position is respectively signal led to the control apparatus as the locating signal and that scanner angular position value at which the reflection locating signals indicate a passage through the crop material edge (GK) due to a positional change in respect of time is ascertained and fed in standardised form to the regulating device.

9. A reflection locating apparatus according to claim 1 characterised in that its transmitter and receiver have focussing means so that the locating beam region (OST) detects a solid angle with a half-value width of from 5° to 10° and upon correct orientation of the cutter mechanism (MW) a respective half of the locating beam partial region impinges on to the relatively close ears of the corn field (GF) and the other locating beam partial region impinges on to the more remote stubble field.

10. A reflection locating apparatus according to claim 9 characterised in that the locating apparatus (OV) is oriented substantially on to the crop material edge (GK), preferably adjustably, 100 mm to 500 mm, inclinedly relative to the horizontal, preferably 15° to 25°.

11. A reflection locating apparatus according to one of claims 9 and 10 characterised in that the locating beam region (OST) detects the crop material edge (GK) leading the agricultural machine (1) by such a forward spacing (VA) that the locating signal deviation from a comparative value predetermined as a locating criterion partially represents a crop material edge lateral displacement (GKS) and partially a respective angle in direction of travel relative to the crop material edge (GK).

12. A reflection locating apparatus according to claim 11 characterised in that the forward spacing (VA) approximately corresponds to the spacing of the steerable rear wheels (HR) from the front wheels of the agricultural machine (1) and from the rear wheels (HR) a wheel position angle signal (RWS) is fed to the regulating device (ST) as a further actual signal.

13. A reflection locating apparatus according to claim 12 characterised in that a standardised locating signal (NOS) and the wheel position angle signal (RWS) are respectively fed in digitised form in an addressing mode to a two-dimensional identification data field (TB) which respectively so produces a steering control parameter (LSG) from which the respective right-lock or left-lock hydraulic steering control signal (SHL, SHR) is formed.

14. A reflection locating apparatus according to one of claims 9 to 11 characterised in that only the early part of the locating signal (OSF) is detected, which originates from the corn field (GF) and is integrated and/or evaluated in respect of amplitude and respectively compared to a comparative value corresponding to half a maximum value which issues when the locating beam range (OST) is fully directed into the corn field (GF) and the respective deviation from the comparative value is further evaluated as a standardised locating signal (NOS) in the regulating device (ST).

15. A reflection locating apparatus according to one of claims 9 to 11 characterised in that the early part of the locating signal (OSF) is detected, which originates from the corn field (GF) and separately therefrom the later part of the locating signal (OSN) is detected, which originates from the stubble field and those signal components are integrated and then there is formed therefrom a quotient which is standardised in relation to a predetermined comparative value and further evaluated as a standardised locating signal (NOS) in the regulating device (ST).

16. A reflection locating apparatus according to one of claims 14 and 15 characterised in that the comparative values and the time limits of the two locating signal parts can be stored and selected for different kinds of crop and height-wise and inclination settings.

17. A reflection locating apparatus according to one of claims 9 to 16 characterised in that the transmitter is an ultrasonic transmitter or a microwave transmitter.

## Revendications

1. Dispositif de repérage reflex destiné à une machine agricole (1), en particulier dispositif de repérage du bord de produit récolté, dont les signaux de repérage (OS1, OS2; OS) sont transmis à un dispositif de réglage (ST) qui délivre au moins un signal de réglage d'hydraulique de braquage (SHL, SHR) à une hydraulique de braquage (LH) commandé par voie électrique de roues orientables (HR) de la machine agricole (1), de telle sorte qu'un écart de signal de repérage par rapport à un critère de repérage prédéfini, en particulier une distance (GKS) prédéterminée entre un bord de produit récolté (GK) et un bord du mécanisme de coupe, soit réduite au minimum, l'émetteur et le récepteur du dispositif de repérage (OV; OV1, OV2) étant disposés sur la machine agricole (1) avec une orientation du pinceau de rayons de repérage (OST; OST1, OST2) telle, que celui-ci soit légèrement incliné par rapport au sol et palpe le champ de céréale (GF), caractérisé par le fait que le dispositif de repérage (OV; OV1, OV2) est disposé au-dessus de la céréale, à distance de celle-ci, et que le pinceau de rayons de repérage (OST; OST1, OST2) est orienté sensiblement perpendiculairement au mécanisme de coupe (MW) et lorsque la position latérale par rapport au bord de céréale (GKS) est corecte, palpe en biais depuis le haut, devant le mécanisme de coupe (MW) la céréale dressée du champ de céréale (GF) avec un pinceau de rayons élémentaire, et palpe le champ de chaumes avec l'autre pinceau de rayons élémentaire.

2. Dispositif de repérage reflex selon la revendication 1, caractérisé par le fait que le pinceau de rayons de repérage se compose d'au moins deux pinceaux de rayons de repérage fortement focalisés (OST1, OST2) qui sont espacés latéralement ou sont orientés dans des directions divergentes de telle sorte que, lorsque la position par rapport au bord de céréale est correcte, le premier pinceau de rayons élémentaire (OST1) soit dirigé sur le champ de céréale (GF) et le deuxième pinceau de rayons élémentaire (OST2) sur le champ de chaumes et que la position dans le temps et l'espacement dans le temps des deux signaux échos de repérage (OS1, OS2) associés sont exploités de telle sorte qu'un braquage en direction de l'intérieur du champ de céréale (GF) est déclenché chaque fois que les deux signaux échos de repérage (OS1*, OS2*) apparaissent simultanément ou proches l'un de l'autre relativement tard dans le temps, et qu'un braquage en direction de l'extérieur du champ de céréale (GF) est déclenché chaque fois que les deux signaux échos de repérage (OS1'', OS2'') apparaissent simultanément ou proches l'un de l'autre relativement tôt dans le temps, et qu'un déplacement en ligne droite a lieu chaque fois qu'apparaissent un signal écho de repérage relativement tôt et un signal écho de repérage relativement tard (OS1, OS2).

3. Dispositif de repérage reflex selon la revendications 2, caractérisé par le fait que les deux rayons de repérage élémentaires (OST1, OST2) présentent des inclinaisons différentes par rapport à l'horizontale, avec un angle vertical compris entre 1° et 5° et que, lorsque les deux signaux échos de repérage (OS1*, OS2*; OS1'', OS2'') n'apparaissent pas séparés l'un de l'autre, un message d'erreur est émis.

4. Dispositif de repérage reflex selon la revendication 2, caractérisé par le fait que les deux rayons de repérage élémentaires (OST1, OST2) sont inclinés l'un par rapport à l'autre dans la direction verticale et les dispositifs de repérage élémentaires (OV1, OV2) sont disposés à une hauteur relative, de préférence par un préréglage de la hauteur relative et de l'inclinaison relative, de telle sorte que lorsque le mécanisme de coupe (MW) est orienté normalement et que l'écart par rapport au bord de céréale (GKS) est normal, les deux signaux de repérage (OS1, OS2) apparaissent à des instants d'écho prédéterminés, en particulier à un même instant prédéterminé, et que l'apparition d'un signal de repérage en avance ou en retard par rapport à cet instant en mode récolte est transmis au dispositif de réglage de braquage en tant que critère de réglage .

5. Dispositif de repérage reflex selon une des revendications 2 à 4, caractérisé par le fait que les rayons de repérage élémentaires (OST1, OST2) sont inclinés d'au moins 15° vers le bas et tangentent le champ de céréale (GF) à une distance comprise entre 3 et 6 m et le champ de chaumes à une distance comprise entre 6 et 12 m.

6. Dispositif de repérage reflex selon une des revendications 2 à 5, caractérisé par le fait que les rayons de repérage élémentaires (OST1, OST2) divergent en formant un angle d'environ 3° dans la direction horizontale.

7. Dispositif de repérage reflex selon une des revendications 2 à 6, caractérisé par le fait que les rayons de repérage élémentaires (OST1, OST2) sont des rayons laser.

8. Dispositif de repérage reflex selon une des revendications 2 à 7, caractérisé par le fait que plusieurs rayons de repérage élémentaires (OST1, OST2) sont émis périodiquement par un scanner à laser et que les signaux de repérage reflex de ceux-ci sont reçus et exploités, une position angulaire de scanner étant indiquée chaque fois au dispositif de commande en tant que signal de repérage et la valeur de position angulaire de scanner pour laquelle les signaux de repérage reflex indiquent par un changement de position le temporel un passage par le bord de produit récolté (GK) étant déterminée et transmise normée au dispositif de réglage.

9. Dispositif de repérage reflex selon la revendication 1, caractérisé par le fait que l'émetteur et le récepteur comportent des moyens de focalisation, de telle sorte que le pinceau de rayons de repérage (OST) englobe un angle solide avec une largeur de lobe comprise entre 5 et 10° et que, lorsque le mécanisme de coupe (MW) est correctement orienté, un pinceau élémentaire de rayons de repérage palpe les épis relativement proches du champ de céréale (GF) et l'autre pinceau élémentaire de rayons de repérage palpe le champ de chaumes plus éloigné.

10. Dispositif de repérage reflex selon la revendication 9, caractérisé par le fait que le dispositif de repérage (OV) est monté, de préférence avec possibilité de réglage, 100 mm à 500 mm, de préférence avec une inclinaison de 15° à 25° par rapport à l'horizontale, au-dessus du bord de produit récolté (GK).

11. Dispositif de repérage reflex selon une des revendications 9 ou 10, caractérisé par le fait que le pinceau de rayons de repérage (OST) palpe le bord de produit récolté (GK) de manière anticipée par rapport à la machine agricole (1) avec une distance d'anticipation (VA) telle que l'écart de signal de repérage par rapport à une valeur de référence prédéfinie en tant que critère de repérage représente d'une part un décalage latéral du bord de produit récolté (GKS) et d'autre part un angle de direction de déplacement par rapport au bord de produit récolté (GK). .

12. Dispositif de repérage reflex selon la revendication 11, caractérisé par le fait que la distance d'anticipation (VA) correspond approximativement à la distance entre les roues arrières (HR) orientables et les roues avant de la machine agricole (1) et que les roues arrières (HR) envoient un signal d'angle de braquage de roue (RWS) au dispositif de commande (ST) en tant que signal réel supplémentaire.

13. Dispositif de repérage reflex selon la revendication 12, caractérisé par le fait qu'un signal de repérage (NOS) normé et le signal d'angle de braquage de roue (RWS) sont transmis sous forme numérisée en adressage à un registre de données bi-dimensionnel (TB) qui fournit une grandeur de commande de braquage (LSG) sur la base de laquelle est formé le signal de réglage d'hydraulique de braquage (SHL, SHR) provoquant le braquage vers la droite ou vers la gauche.

14. Dispositif de repérage reflex selon une des revendications 9 à 11, caractérisé par le fait que seule la partie du signal de repérage (OSF) qui apparaît en premier et provient du champ de céréale (GF) est détectée et intégrée et/ou exploitée sur le plan de l'amplitude et comparée à une valeur de référence qui correspond à une moitié de la valeur maximale obtenue lorsque le pinceau de rayons de repérage (OST) est entièrement dirigé sur le champ de céréale (GF) et que l'écart par rapport à la valeur de référence est ensuite exploité en tant que signal de repérage (NOS) normé dans le dispositif de réglage (ST).

15. Dispositif de repérage reflex selon une des revendications 9 à 11, caractérisé par le fait que la partie du signal de repérage (OSF) qui apparaît en premier et provient du champ de céréale (GF) est détectée et la partie du signal de repérage (OSN) décalée dans le temps qui provient du champ de chaumes est détectée séparément, que ces parties de signal sont intégrées et qu'un quotient est calculé à partir de celles-ci, lequel quotient est normé par rapport une valeur de référence prédéterminée et est ensuite exploité en tant que signal de repérage (NOS) normé dans le dispositif de réglage (ST).

16. Dispositif de repérage reflex selon une des revendications 14 ou 15, caractérisé par le fait que les valeurs de référence ainsi que les limites temporelles des deux parties de signal de repérage pour différents variétés de grains et réglages en hauteur et en inclinaison sont mémorisées et peuvent être sélectionnées.

17. Dispositif de repérage reflex selon une des revendications 9 à 16, caractérisé par le fait que l'émetteur est un émetteur à ultrasons ou un émetteur à microondes.
